# DEMANDE DE BREVET EUROPEEN

(11) **EP 4 834 107 A1**
(43) Date de publication de la demande: **04.11.2026**
(21) Numéro de dépôt: 26174942.8
(22) Date de dépôt: 27.04.2026
(51) Int. Cl.: A01M 7/00

(54) **PANNEAU DE PULVÉRISATION ET DE RÉCUPÉRATION D'UN PRODUIT DE PULVÉRISATION ET SYSTÈME DE PULVÉRISATION AGRICOLE**

(30) Priorité: 28.04.2025 FR 2504480
(71) Demandeur: Dagnaud, 17800 Montils (FR)
(72) Inventeur: DUGUÉ, Frédéric, 17240 MOSNAC (FR); DUGUÉ, Anthony, 17800 PONS (FR)
(74) Mandataire: Santarelli

(57) **Abrégé**

L'invention concerne un panneau de pulvérisation et de récupération configuré pour pulvériser un produit de pulvérisation sur une culture agricole, comportant :
- un corps de panneau (3) creux,
- au moins une buse de pulvérisation disposée sur la face avant du corps de panneau (3),
- un bac de récupération configuré pour récupérer du produit de pulvérisation,
le corps de panneau (3) présentant une entrée d'air s'étendant en périphérie du corps de panneau (3), la face arrière (5) du corps de panneau (3) présentant une ouverture et le panneau comporte un ventilateur (37) comprenant une hélice disposée au moins partiellement dans ou en regard de ladite ouverture ménagée sur la face arrière (5) dudit panneau de pulvérisation et de récupération.

## Description

### DOMAINE TECHNIQUE DE L'INVENTION

L'invention a trait à la pulvérisation d'un produit de pulvérisation, tel qu'un produit phytosanitaire, sur des cultures agricoles, et plus particulièrement sur des plantations alignées en rangs, par exemple des vignes, ainsi qu'à la récupération d'une partie du produit de pulvérisation qui a été pulvérisé mais qui n'a pas atteint les cultures agricoles.

En particulier, l'invention concerne un panneau de pulvérisation et de récupération d'un produit de traitement et un système de pulvérisation agricole comprenant des panneaux de pulvérisation et de récupération.

### ÉTAT DE LA TECHNIQUE

On connaît des panneaux de pulvérisation configurés à la fois pour pulvériser un produit de pulvérisation sur des cultures agricoles et pour récupérer une partie du produit de pulvérisation qui a été pulvérisée mais qui n'a pas atteint les cultures.

Certains de ces panneaux mettent en œuvre un flux d'air pour confiner le produit de pulvérisation, d'une part pour éviter que le produit de pulvérisation ne se répande dans l'atmosphère (phénomène de dérive), et d'autre part afin de contraindre le produit de pulvérisation vers une zone de récupération où la partie du produit qui n'a pas atteint la culture est récupérée.

Par exemple, le brevet européen EP 3 694 319 divulgue un panneau se présentant sous la forme d'un caisson creux ayant une face arrière munie d'une paroi sensiblement fermée et une face avant d'où sont effectuées à la fois la pulvérisation et la récupération du produit de pulvérisation.

Le caisson comporte, sur ses bords latéraux, une pluralité d'orifices de sortie d'air, et dans sa partie supérieure, une ouverture d'arrivée d'air recevant de l'air sous pression généré par une centrale de génération d'air comprimé.

### EXPOSÉ DE L'INVENTION

La présente invention vise à fournir un panneau de pulvérisation et de récupération d'un type similaire, qui soit particulièrement simple, compact et performant.

À cet effet, l'invention vise, selon un premier aspect, un panneau de pulvérisation et de récupération configuré pour pulvériser un produit de pulvérisation sur une culture agricole, comportant :
- un corps de panneau creux définissant un volume intérieur et présentant une face avant destinée à faire face à la culture agricole et une face arrière opposée à la face avant,

au moins une buse de pulvérisation disposée sur la face avant du corps de panneau pour pulvériser le produit de pulvérisation sur la culture agricole, et
un bac de récupération s'étendant en saillie de la face avant du corps de panneau et étant configuré pour récupérer du produit de pulvérisation, directement et/ou par écoulement du produit de pulvérisation le long de ladite face avant,
le corps de panneau présentant une entrée d'air, une sortie d'air et un canal d'air interne s'étendant dans le volume intérieur du corps de panneau entre l'entrée d'air et la sortie d'air, la sortie d'air s'étendant en périphérie du corps de panneau et étant configurée pour former un flux d'air sous forme d'un rideau d'air pour confiner le produit de pulvérisation pulvérisé par l'au moins une buse de pulvérisation,
le panneau de pulvérisation et de récupération étant caractérisé en ce que la face arrière du corps de panneau présente une ouverture définissant ladite entrée d'air, et en ce que le panneau de pulvérisation et de récupération comporte un ventilateur comprenant une hélice et un moteur configuré pour entrainer l'hélice en rotation, le ventilateur étant monté sur le corps de panneau avec l'hélice qui est disposée au moins partiellement dans ou en regard de ladite ouverture ménagée sur la face arrière du corps de panneau pour générer un flux d'air dans une direction allant de l'entrée d'air vers la sortie d'air et ainsi former le rideau d'air autour du produit de pulvérisation pulvérisé par l'au moins une buse de pulvérisation.

Dans le panneau de pulvérisation et de récupération selon l'invention, le ventilateur est porté par le corps de panneau.

En outre, le corps de panneau guide le flux d'air depuis le ventilateur jusqu'à la sortie d'air.

En effet, le flux d'air généré par l'hélice du ventilateur est guidé à l'intérieur du corps de panneau, depuis l'ouverture ménagée sur la face arrière jusqu'à la sortie d'air en périphérie du corps de panneau.

Le trajet de l'air entre le ventilateur et la sortie d'air est alors relativement court, ce qui permet de limiter les pertes de charge.

Il est donc possible, à partir d'un ventilateur de taille relativement faible, d'obtenir un rideau d'air capable d'empêcher le produit de pulvérisation de le traverser et de se disperser dans l'environnement.

Ainsi, le panneau de pulvérisation et de récupération selon l'invention permet à la fois de réduire fortement le phénomène de dérive et de récupérer une quantité importante de produit de pulvérisation tout en étant relativement compact.

Des caractéristiques préférées, simples, commodes et économiques du panneau de pulvérisation et de récupération selon l'invention sont présentées ci-après.

La face arrière du corps de panneau peut présenter une zone de renfoncement dans laquelle est reçu au moins partiellement le ventilateur.

La face avant du corps de panneau peut présenter une forme globalement concave définissant une cavité et peut comporter une face de fond et deux faces latérales opposées s'étendant depuis la face de fond, la face avant du corps de panneau présentant une zone de renflement s'étendant depuis la face de fond dans la cavité et étant ménagée en correspondance de la zone de renfoncement de la face arrière.

L'au moins une buse de pulvérisation peut être disposée entre la zone de renflement et l'une des faces latérales.

L'au moins une buse de pulvérisation et le ventilateur peuvent s'étendre sensiblement dans un même plan, lequel plan correspondant à un plan général d'extension du corps de panneau.

Le moteur du ventilateur peut être disposé dans le volume intérieur du corps de panneau, entre la zone de renfoncement et la zone de renflement.

Le corps de panneau peut présenter un compartiment interne s'étendant dans le volume intérieur du corps de panneau, et peut comporter une paroi interne séparant le compartiment interne du canal d'air interne, et dans lequel le moteur du ventilateur est reçu au moins partiellement dans le compartiment interne.

La face avant du corps de panneau peut présenter un bossage s'étendant en saillie de la zone de renflement et dans lequel est reçu au moins partiellement le moteur du ventilateur.

Le panneau de pulvérisation et de récupération peut comporter un capot de fermeture fixé de manière amovible sur la face avant du corps de panneau pour définir au moins partiellement le compartiment interne.

L'invention vise également, selon un deuxième aspect, un système de pulvérisation agricole comportant :
- deux panneaux de pulvérisation et de récupération selon le premier aspect de l'invention,
- un support portant les panneaux de pulvérisation et de récupération et étant configuré pour maintenir les panneaux de pulvérisation et de récupération au moins dans une configuration de pulvérisation dans laquelle la face avant d'un des panneaux de pulvérisation et de récupération est en regard et à distance de la face avant de l'autre des panneaux de pulvérisation et de récupération,
la sortie d'air de chaque panneau de pulvérisation et de récupération étant configurée de sorte que le rideau d'air formé s'étende en direction de l'autre panneau de pulvérisation et de récupération.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 représente de manière schématique un système de pulvérisation agricole selon l'invention.
La figure 2 est une vue de face d'un panneau de pulvérisation et de récupération du système agricole de la figure 1, montrant la face avant dudit panneau.
La figure 3 est similaire à la figure 2, mais selon un autre angle de vue.
La figure 4 est similaire à la figure 2, mais montre la face arrière dudit panneau.
La figure 5 est similaire à la figure 4, mais selon un autre angle de vue.
La figure 6 est une vue en coupe repérée VI-VI sur la figure 5, montrant l'intérieur du panneau de la figure 2.
La figure 7 est une vue éclatée du panneau de la figure 2.
La figure 8 est similaire à la figure 7, mais selon un autre angle de vue.
La figure 9 représente schématiquement, selon une vue de dessus, le fonctionnement du système de pulvérisation agricole de la figure 1.

### DESCRIPTION DÉTAILLÉE DE L'INVENTION

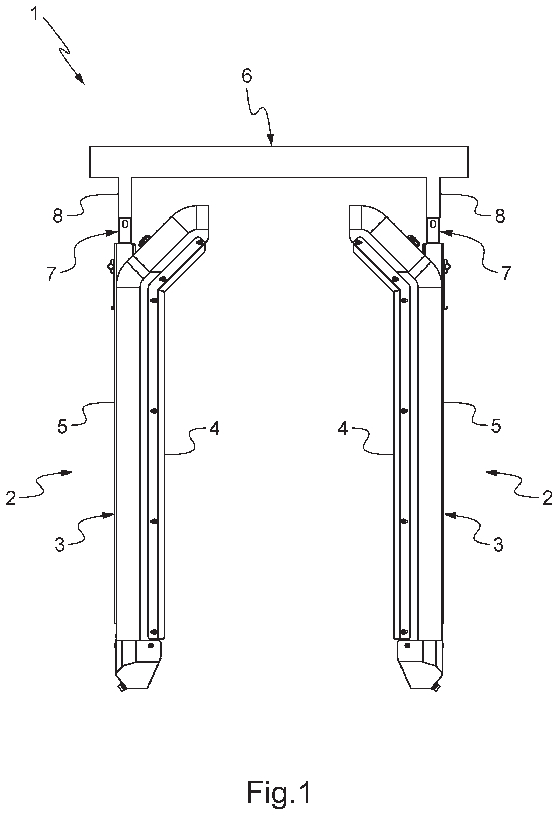

La figure 1 représente schématiquement un système de pulvérisation agricole 1 configuré pour pulvériser un produit de pulvérisation, tel qu'un produit phytosanitaire, sur des cultures agricoles, et plus particulièrement sur des plantations alignées en rangs, comme des vignes par exemple.

Le système de pulvérisation agricole 1 peut être porté, tracté, ou bien se déplacer de manière autonome.

Le système de pulvérisation agricole 1 comporte deux panneaux de pulvérisation et de récupération 2.

Chaque panneau 2 comporte un corps de panneau 3 présentant une face avant 4 par laquelle le panneau 2 est configuré pour pulvériser le produit de pulvérisation, et une face arrière 5 opposée à la face avant 4.

Le système de pulvérisation agricole 1 est configuré pour admettre une configuration de pulvérisation, illustrée sur la figure 1, dans laquelle la face avant 4 du corps de panneau 3 d'un des panneaux 2 est en regard et à distance de la face avant 4 du corps de panneau 3 de l'autre des panneaux 2.

Dans l'exemple illustré, le système de pulvérisation agricole 1 comporte un support 6, prenant ici la forme d'un bras, portant les panneaux 2.

Les panneaux 2 peuvent ainsi être déplacés dans la configuration de pulvérisation par un engin agricole, tel qu'un tracteur, à l'aide du support 6.

Pour leur fixation sur le support 6, chaque panneau 2 comporte un organe de fixation 7 fixé sur le corps de panneau 3.

Le support 6 comporte deux organes de fixation complémentaires 8, chaque organe de fixation complémentaire 8 étant solidarisé avec l'organe de fixation 7 d'un des panneaux 2, par exemple par l'intermédiaire d'organes d'assemblage, tels que des boulons.

La distance entre les panneaux 2, notamment dans la configuration de pulvérisation, peut être ajustée par l'intermédiaire du support 6.

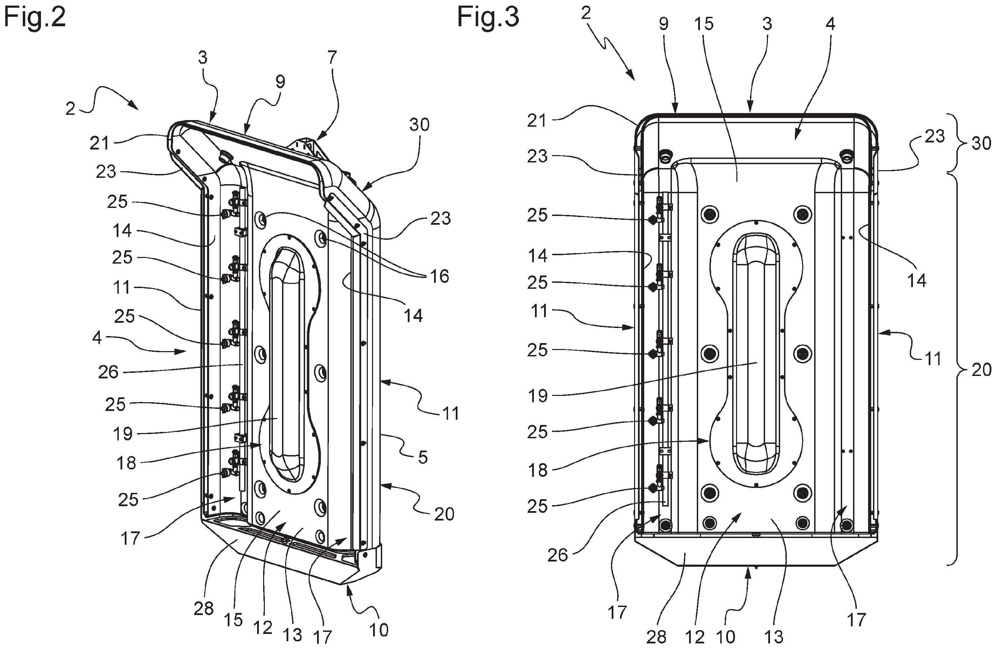

Les figures 2 à 5 montrent de manière isolée un panneau de pulvérisation et de récupération 2.

Le corps de panneau 3 présente un bord supérieur 9, un bord inférieur 10 opposé au bord supérieur 9, et deux bords latéraux 11 opposés reliant chacun le bord inférieur 10 au bord supérieur 9.

Le corps de panneau 3 présente une partie globalement plane 20 s'étendant depuis le bord inférieur 10 et une partie inclinée 30 s'étendant depuis la partie globalement plane 20 jusqu'au bord supérieur 9.

La partie globalement plane 20 définit un plan général d'extension du corps de panneau 3.

Comme illustré sur les figures 2 et 3, la face avant 4 du corps de panneau 3 présente une forme globalement concave définissant une cavité 12.

En particulier, la face avant 4 comporte une face de fond 13 et deux faces latérales 14 opposées s'étendant depuis la face de fond 13.

La face de fond 13 et les faces latérales 14 s'étendent depuis le bord inférieur 10 jusqu'au bord supérieur 9.

La face de fond 13 et les faces latérales opposées 14 définissent au moins partiellement la cavité 12.

La face avant 4 du corps de panneau 3 présente en outre une zone de renflement 15 s'étendant depuis la face de fond 13 dans la cavité 12 et deux rainures 17 s'étendant de part et d'autre de la zone de renflement 15.

La zone de renflement 15 et les rainures 17 s'étendent le long de la partie globalement plane 20 du corps de panneau 3.

Chaque rainure 17 s'étend entre la zone de renflement 15 et l'une des faces latérales 14.

La face avant 4 est aussi pourvue d'une pluralité de renfoncements 16 ménagés ici dans la zone de renflement 15.

Le panneau 2 comporte en outre un capot de fermeture 18 fixé de manière amovible, ici à l'aide de vis, sur la face avant 4 du corps de panneau 3, dans la zone de renflement 15.

Le capot de fermeture 18 présente un bossage 19 qui s'étend en saillie de la zone de renflement 15 lorsque le capot de fermeture 18 est fixé sur le corps de panneau 3.

Le corps de panneau 3 est pourvu d'une fente 21 ménagée ici en périphérie de la face avant 4.

Dans l'exemple illustré, la fente 21 s'étend de manière continue le long des bords latéraux 11 et le long du bord supérieur 9.

La fente 21 présente ainsi une forme globale de U inversé.

La fente 21 est configurée pour former un flux d'air sous forme d'un rideau d'air, ici en forme de U inversé.

Dans l'exemple représenté, la fente 21 est configurée de sorte que le flux d'air sortant de la fente 21 s'étende perpendiculairement au plan général d'extension du corps de panneau 3.

Ainsi, les parties du flux d'air sortant de la fente 21 le long des bords latéraux 11 du panneau 2 s'étendent parallèlement.

Le panneau 2 comporte des déflecteurs 23 fixés sur le corps de panneau 3 le long des bords latéraux 11 pour dévier les parties du flux d'air sortant de la fente 21 le long des bords latéraux 11, de manière à ce que les parties du flux d'air ainsi déviées se rapprochent l'une de l'autre en s'éloignant du panneau 2.

La partie de la face avant 4 entourée par la fente 21 est étanche, de sorte à empêcher le passage d'un liquide à travers cette partie lorsque le liquide est pulvérisé sur cette partie de la face avant 4.

Le panneau 2 comporte des buses de pulvérisation 25 et un conduit 26 le long duquel s'étendent les buses de pulvérisation 25.

Les buses de pulvérisation 25 sont en communication fluidique avec le conduit 26.

Le conduit 26 est destiné à être en communication fluidique avec une source de liquide de pulvérisation afin d'acheminer le liquide de pulvérisation jusqu'aux buses de pulvérisation 25.

Les buses de pulvérisation 25 sont disposées sur la face avant 4 pour pulvériser le produit de pulvérisation selon une direction s'éloignant du panneau 2.

Le conduit 26 et les buses de pulvérisation 25 sont disposées dans une des rainures 17 de la face avant 4.

Comme illustré sur la figure 1, les buses de pulvérisation 25 et le conduit 26 sont reçus entièrement dans la cavité 12.

Le panneau 2 comporte en outre un bac de récupération 28 s'étendant en saillie de la face avant 4.

Le bac de récupération 28 est configuré pour récupérer du produit de pulvérisation, directement et/ou par écoulement du produit de pulvérisation le long de la face avant 4.

Le bac de récupération 28 est disposé le long du bord inférieur 10 du corps de panneau 3 et s'étend depuis l'une des faces latérales 14 jusqu'à l'autre des faces latérales 14.

Le bac de récupération 28 présente une forme de cuvette ouverte en direction du bord supérieur 9.

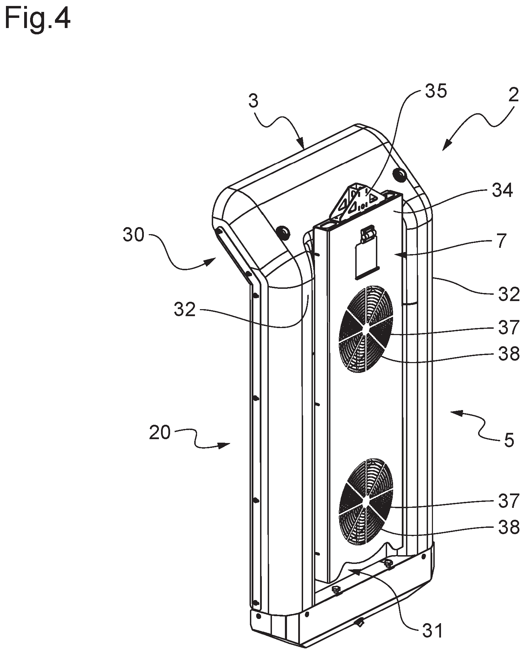

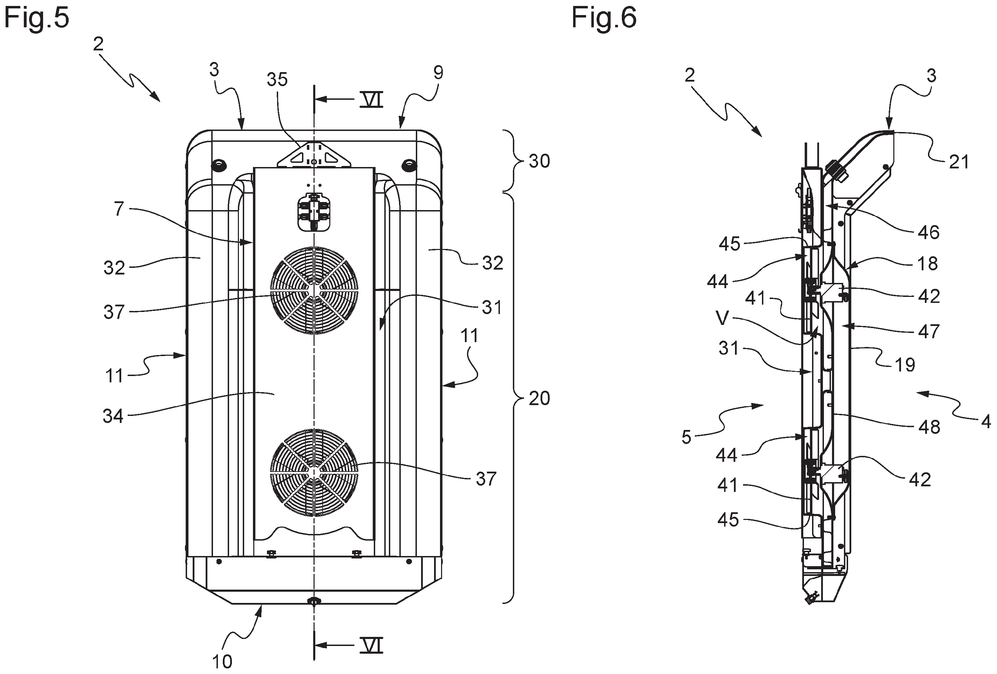

Comme illustré sur les figures 4 et 5, la face arrière 5 du corps de panneau 3 présente une forme globalement convexe.

La face arrière 5 du corps de panneau 3 présente une zone de renfoncement 31 ménagée en correspondance de la zone de renflement de la face avant et deux nervures 32 s'étendant de part et d'autre de la zone de renfoncement 31 et étant ménagées en correspondance des rainures de la face avant.

La zone de renfoncement 31 et les nervures 32 s'étendent dans la partie globalement plane 20 du corps de panneau 3.

L'organe de fixation 7 comporte ici un châssis 34 et un organe d'accrochage 35 fixé au châssis 34.

Le châssis 34 de l'organe de fixation 7 est reçu au moins partiellement dans la zone de renfoncement 31.

L'organe d'accrochage 35 s'étend en regard de la partie inclinée 30 du corps de panneau 3.

Le panneau 2 comporte en outre deux ventilateurs 37 montés sur le corps de panneau 3.

Le châssis 34 comporte ici deux grilles de protection 38 qui recouvrent chacune au moins partiellement un des ventilateurs 37 tout en permettant à l'air d'accéder au ventilateur 37.

Comme visible sur la figure 1, l'organe de fixation 7 et les ventilateurs 37 ne s'étendent pas au-delà des nervures 32.

En particulier, l'organe de fixation 7 est sensiblement affleurant aux nervures 32, de sorte que la face arrière 5 est globalement plane dans la partie globalement plane 20 du corps de panneau 3.

En référence à la figure 6, le corps de panneau 3 est creux et définit un volume intérieur V.

Autrement dit, le corps de panneau 3 se présente sous la forme d'un caisson.

Le corps de panneau 3 présente un canal d'air interne 46 et un compartiment interne 47 s'étendant dans le volume intérieur V.

Le corps de panneau 3 comporte une paroi interne 48 s'étendant dans le volume intérieur V et séparant le canal d'air interne 46 du compartiment interne 47.

La paroi interne 48 et le capot de fermeture 18 définissent entre eux au moins partiellement le compartiment interne 47.

La face arrière 5 du corps de panneau 3 présente ici deux ouvertures 44 ménagées dans la zone de renfoncement 31 et donnant accès au canal d'air interne 46.

Chaque ouverture 44 est ainsi en communication fluidique avec le canal d'air interne 46.

La fente 21 est également en communication fluidique avec le canal d'air interne 46.

Le corps de panneau 3 définit ainsi un canal d'écoulement d'air s'étendant depuis l'une des ouvertures 44 jusqu'à la fente 21 en passant par le canal d'air interne 46.

La face arrière 5 du corps de panneau 3 présente aussi deux collerettes 45, chaque collerette 45 s'étendant en saillie de la face arrière 5 autour d'une ouverture 44 respective.

Chaque ventilateur 37 comporte une hélice 41 et un moteur 42 configuré pour entrainer l'hélice 41 en rotation.

L'hélice 41 de chaque ventilateur 37 est reçue au moins partiellement dans la zone de renfoncement 31 de la face arrière 5 du corps de panneau 3, à l'intérieur d'une collerette 45 respective.

Le moteur 42 de chaque ventilateur 37 est reçu au moins partiellement dans le compartiment interne 47, et plus particulièrement dans le bossage 19 du capot de fermeture 18.

Le moteur 42 est par exemple un moteur hydraulique.

Le montage du moteur 42 dans le volume intérieur V du corps de panneau 3 permet de réduire de manière significative le bruit généré par le fonctionnement du ventilateur 37, ce qui rend le panneau 2 très commode d'utilisation.

Le ventilateur 37 et les buses de pulvérisation (non représentées) s'étendent sensiblement dans un même plan, lequel plan correspondant au plan général d'extension du corps de panneau 3.

Autrement dit, selon une vue de profil, comme illustré à la figure 6, les buses de pulvérisation s'étendent sensiblement entre l'hélice 41 et le moteur 42 de chaque ventilateur 37.

Comme les buses de pulvérisation et les ventilateurs 37 ne sont pas superposés dans l'épaisseur du panneau 2, c'est-à-dire suivant un axe horizontal sur la figure 6, le panneau 2 est relativement compact, notamment dans son épaisseur, ce qui permet une utilisation facile dans des cultures agricoles où les rangs sont proches.

Cela est permis du fait de la configuration de la face avant et de la face arrière 5 du corps de panneau 3 et de la disposition des buses de pulvérisation et des ventilateurs 37 sur le corps de panneau 3.

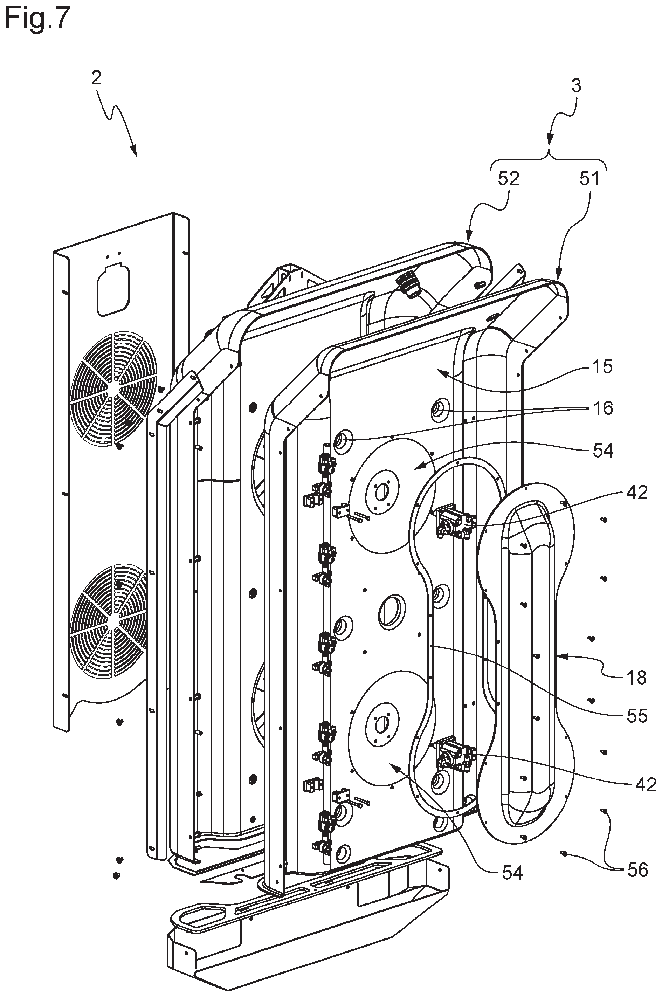

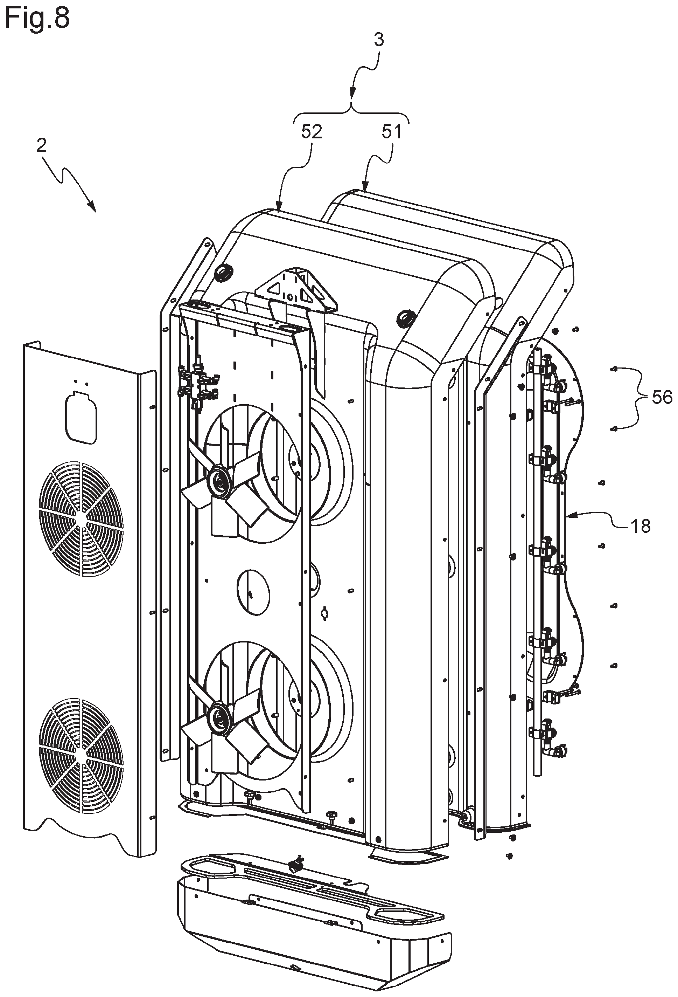

Les figures 7 et 8 sont des vues éclatées montrant l'assemblage du panneau 2.

Dans l'exemple illustré, le corps de panneau 3 comporte une coquille interne 51 définissant au moins partiellement la face avant du corps de panneau 3 et une coquille externe 52 définissant la face arrière du corps de panneau 3.

La coquille interne 51 est configurée pour s'emboîter au moins partiellement dans la coquille externe 52 de sorte que la distance entre la coquille interne et la coquille externe soit globalement constante.

Autrement dit, la coquille interne 51 présente une forme globalement identique à la coquille externe 52, mais des dimensions inférieures.

La coquille interne 51 et la coquille externe 52 sont ici fixées l'une à l'autre par des vis (non représentées).

La distance entre la coquille interne 51 et la coquille externe 52 une fois fixées est déterminée par les renfoncements 16 qui servent d'entretoises.

La coquille interne 51 présente deux zones en creux 54 ménagées dans la zone de renflement 15.

Le capot de fermeture 18 est configuré pour recouvrir les zones en creux 54 et pour former, avec les zones en creux 54, le compartiment interne dans lequel sont reçus les moteurs 42 des ventilateurs.

Le panneau 2 comporte un joint d'étanchéité 55 disposé entre la coquille interne 51 et le capot de fermeture 18 pour assurer l'étanchéité de la face avant du corps de panneau 3.

Le capot de fermeture 18 est fixé sur la coquille interne 51 à l'aide de vis 56 qui traversent le joint d'étanchéité 55.

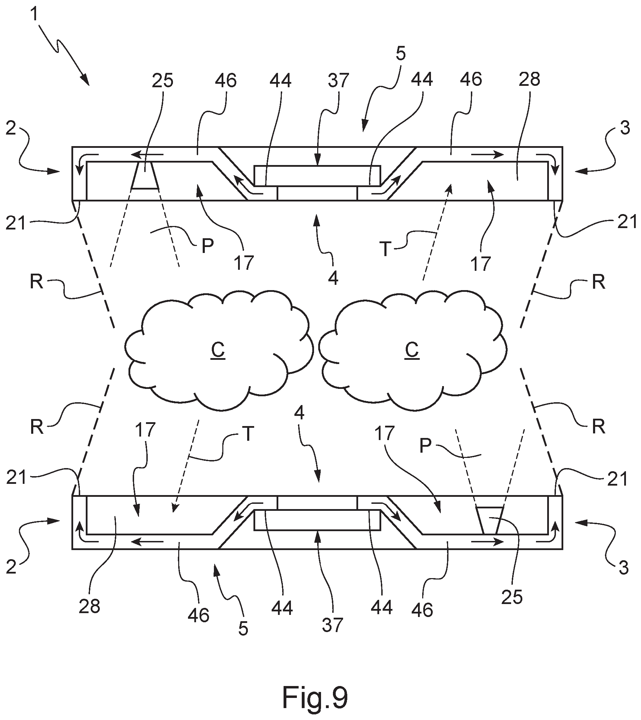

On va maintenant décrire, en référence à la figure 9, le fonctionnement d'un panneau de pulvérisation et de récupération 2 et du système de pulvérisation agricole 1.

Lorsque le moteur du ventilateur 37 est actionné, les hélices tournent et génèrent un flux d'air dans une direction allant de l'ouverture 44 vers la fente 21 en passant par le canal d'air interne 46.

L'ouverture 44 constitue ainsi une entrée d'air tandis que la fente 21 constitue une sortie d'air.

Ainsi, le corps de panneau 3 guide le flux d'air depuis le ventilateur 37 jusqu'à la sortie d'air 21.

En effet, le flux d'air généré par l'hélice du ventilateur 37 est guidé à l'intérieur du corps de panneau 3, depuis l'ouverture 44 ménagée sur la face arrière 5 jusqu'à la sortie d'air 21 en périphérie du corps de panneau 3.

Le trajet de l'air entre le ventilateur 37 et la sortie d'air 21 est alors relativement court, ce qui permet de limiter les pertes de charge.

En sortie de la fente 21, le flux d'air se présente sous la forme d'un rideau d'air R, c'est-à-dire un flux laminaire, s'étendant de manière continue et ayant une section en forme de U inversé.

Simultanément, les buses de pulvérisation 25 pulvérisent le produit de pulvérisation sous forme d'un flux P sur les cultures agricoles C.

Le produit de pulvérisation agricole se présente généralement sous forme liquide, et peut être un liquide phytosanitaire.

Le rideau d'air R est configuré pour confiner le produit de pulvérisation pulvérisé par les buses de pulvérisation 25.

En effet, le rideau d'air R forme une barrière infranchissable pour le produit de pulvérisation.

On notera qu'une partie du flux P de produit de pulvérisation est déviée par le rideau d'air R à son contact.

Grâce à la configuration du panneau 2, il est possible, à partir d'un ventilateur de taille relativement faible, d'obtenir un rideau d'air R capable d'empêcher le flux P de produit de pulvérisation de le traverser et de se disperser dans l'environnement.

Sur la figure 9, le système de pulvérisation agricole 1 se trouve dans sa configuration de pulvérisation où le système de pulvérisation agricole 1 enjambe les cultures agricoles C, avec les panneaux 2 qui sont situés de part et d'autre des cultures agricoles C.

La face avant 4 du corps de panneau 3 de chaque panneau 2 est en regard des cultures agricoles C.

On notera que les buses de pulvérisation 25 de chaque panneau 2 sont décalées l'une par rapport à l'autre.

En particulier, les buses de pulvérisation 25 de chaque panneau 2 sont disposées dans une rainure 17 en regard d'une rainure 17 de l'autre panneau 2 qui est dépourvue de buses de pulvérisation 25.

Le rideau d'air R formé par chaque panneau 2 s'étend en direction de l'autre panneau 2.

Ainsi, le flux P de produit de pulvérisation est contraint par le rideau d'air R à se diriger vers les cultures agricoles C.

Le rideau d'air R permet également d'agiter les cultures agricoles C et ainsi d'améliorer la répartition du produit de pulvérisation sur les cultures C.

Il est possible qu'une partie T du flux P de produit de pulvérisation n'atteigne pas les cultures C et passe au travers des cultures C.

Dans ce cas, la partie T du flux P de produit de pulvérisation est contrainte par le rideau d'air R à se diriger vers l'autre panneau 2.

La partie T du flux P de produit de pulvérisation rencontre alors la face avant 4 du corps de panneau 3 et s'écoule le long de la face avant 4 jusqu'au bac de récupération 28 où le produit de pulvérisation récupéré est par exemple filtré avant d'être réutilisé.

Ainsi, grâce aux panneaux 2, le système de pulvérisation agricole 1 permet à la fois de réduire fortement le phénomène de dérive et de récupérer une quantité importante de produit de pulvérisation tout en étant relativement compact.

Des variantes non illustrées sont présentées ci-dessous.

Le système de pulvérisation agricole peut être dépourvu de support.

L'organe de fixation et le corps de panneau peuvent être réalisés d'un seul tenant.

Les déflecteurs peuvent être réalisées d'un seul tenant avec le corps de panneau.

Le panneau peut comporter un nombre différent de buses de pulvérisation, par exemple moins ou plus de cinq.

Le panneau peut comporter un nombre différent de ventilateurs, par exemple un seul ou plus de deux.

Le corps de panneau peut être formé d'un seul tenant.

Plus généralement, l'invention ne se limite pas aux exemples décrits et représentés.

## Revendications

1. Panneau de pulvérisation et de récupération configuré pour pulvériser un produit de pulvérisation sur une culture agricole (C), comportant :
- un corps de panneau (3) creux définissant un volume intérieur (V) et présentant une face avant (4) destinée à faire face à la culture agricole (C) et une face arrière (5) opposée à la face avant (4),
- au moins une buse de pulvérisation (25) disposée sur la face avant (4) du corps de panneau (3) pour pulvériser le produit de pulvérisation sur la culture agricole (C), et
- un bac de récupération (28) s'étendant en saillie de la face avant (4) du corps de panneau (3) et étant configuré pour récupérer du produit de pulvérisation, directement et/ou par écoulement du produit de pulvérisation le long de ladite face avant (4),
le corps de panneau (3) présentant une entrée d'air (44), une sortie d'air (21) et un canal d'air interne (46) s'étendant dans le volume intérieur (V) du corps de panneau (3) entre l'entrée d'air (44) et la sortie d'air (21),
la sortie d'air (21) s'étendant en périphérie du corps de panneau (3) et étant configurée pour former un flux d'air sous forme d'un rideau d'air pour confiner le produit de pulvérisation pulvérisé par l'au moins une buse de pulvérisation (25),
le panneau de pulvérisation et de récupération étant **caractérisé en ce que** la face arrière (5) du corps de panneau (3) présente une ouverture (44) définissant ladite entrée d'air (44), et **en ce que** le panneau de pulvérisation et de récupération comporte un ventilateur (37) comprenant une hélice (41) et un moteur (42) configuré pour entrainer l'hélice (41) en rotation, le ventilateur (37) étant monté sur le corps de panneau (3) avec l'hélice (41) qui est disposée au moins partiellement dans ou en regard de ladite ouverture (44) ménagée sur la face arrière (5) du corps de panneau (3) pour générer un flux d'air dans une direction allant de l'entrée d'air (44) vers la sortie d'air (21) et ainsi former le rideau d'air autour du produit de pulvérisation pulvérisé par l'au moins une buse de pulvérisation (25).

2. Panneau de pulvérisation et de récupération selon la revendication 1, dans lequel la face arrière (5) du corps de panneau (3) présente une zone de renfoncement (31) dans laquelle est reçu au moins partiellement le ventilateur (37).

3. Panneau de pulvérisation et de récupération selon la revendication 2, dans lequel la face avant (4) du corps de panneau (3) présente une forme globalement concave définissant une cavité (12) et comporte une face de fond (13) et deux faces latérales (14) opposées s'étendant depuis la face de fond (13), la face avant (4) du corps de panneau (3) présentant une zone de renflement (15) s'étendant depuis la face de fond (13) dans la cavité (12) et étant ménagée en correspondance de la zone de renfoncement (31) de la face arrière (5).

4. Panneau de pulvérisation et de récupération selon la revendication 3, dans lequel l'au moins une buse de pulvérisation (25) est disposée entre la zone de renflement (15) et l'une des faces latérales (14).

5. Panneau de pulvérisation et de récupération selon l'une quelconque des revendications 1 à 4, dans lequel l'au moins une buse de pulvérisation (25) et le ventilateur (37) s'étendent sensiblement dans un même plan, lequel plan correspondant à un plan général d'extension du corps de panneau (3).

6. Panneau de pulvérisation et de récupération selon l'une quelconque des revendications 3 à 5, dans lequel le moteur (42) du ventilateur (37) est disposé dans le volume intérieur (V) du corps de panneau (3), entre la zone de renfoncement (31) et la zone de renflement (15).

7. Panneau de pulvérisation et de récupération selon la revendication 6, dans lequel le corps de panneau (3) présente un compartiment interne (47) s'étendant dans le volume intérieur (V) du corps de panneau (3), et comporte une paroi interne (48) séparant le compartiment interne (47) du canal d'air interne (46), et dans lequel le moteur (42) du ventilateur (37) est reçu au moins partiellement dans le compartiment interne (47).

8. Panneau de pulvérisation et de récupération selon l'une des revendications 6 et 7, dans lequel la face avant (4) du corps de panneau (3) présente un bossage (19) s'étendant en saillie de la zone de renflement (15) et dans lequel est reçu au moins partiellement le moteur (42) du ventilateur (37).

9. Panneau de pulvérisation et de récupération selon l'une quelconque des revendications 6 à 8, comportant un capot de fermeture (18) fixé de manière amovible sur la face avant (4) du corps de panneau (3) pour définir au moins partiellement le compartiment interne (47).

10. Système de pulvérisation agricole comportant :
- deux panneaux de pulvérisation et de récupération (2) selon l'une quelconque des revendications 1 à 9,
- un support (6) portant les panneaux de pulvérisation et de récupération (2) et étant configuré pour maintenir les panneaux de pulvérisation et de récupération (2) au moins dans une configuration de pulvérisation dans laquelle la face avant (4) d'un des panneaux de pulvérisation et de récupération (2) est en regard et à distance de la face avant (4) de l'autre des panneaux de pulvérisation et de récupération (2),
la sortie d'air (21) de chaque panneau de pulvérisation et de récupération (2) étant configurée de sorte que le rideau d'air formé s'étende en direction de l'autre panneau de pulvérisation et de récupération (2).
